# EUROPÄISCHE PATENTSCHRIFT

(11) **EP 1 308 873 B1**
(45) Veröffentlichungstag und Bekanntmachung des Hinweises auf die Patenterteilung: **30.06.2004**
(21) Anmeldenummer: 02023491.0
(22) Anmeldetag: 21.10.2002
(51) Int. Cl.: G06K 7/00

(54) **Lesegerät für elektronische Datenträger mit Zugangsberechtigung**
Reader for electronic data carriers with access authorisation
Lecteur pour supports de données électroniques autorsants l'accès

(30) Priorität: 31.10.2001 DE 20117644 U
(43) Veröffentlichungstag der Anmeldung: 07.05.2003
(73) Patentinhaber: SIEMENS AKTIENGESELLSCHAFT, 80333 München (DE)
(72) Erfinder: Füg, Fritz, 90556 Cadolzburg (DE)

(56) Entgegenhaltungen:
- EP-A- 0 791 890
- WO-A-98/12674
- FR-A- 2 773 302
- US-A- 6 137 710

## Beschreibung

Die Erfindung betrifft ein Lesegerät für elektronische Datenträger sowie einen Desktop-Rechner und Netzzugangsrechner mit dem Lesegerät für elektronische Datenträger.

Lesegeräte für elektronische Datenträger werden z.B. beim bargeldlosen Zahlungsverkehr mit Kreditkarten oder EC-Karten in Geschäften eingesetzt. Die Lesegeräte sind dabei über eine Datenleitung mit einer elektronischen Kasse verbunden. Der eigentliche bargeldlose Zahlung erfolgt dann in der Weise, dass die Kreditkarte oder die EC-Karte in den Leseschlitz des Lesegeräts einschoben und anschließend wieder herausgezogen wird. Nach Identifizierung der Kreditkarte mittels der auf dieser gespeicherten Daten erfolgt dann die Berechtigung zur Zahlung des Kaufbetrags durch Eingabe einer PIN.

Aus der WO 98/12674 ist ein Dateneingabegerät bekannt, welches eine Anzeige und ein Tastatur zum bargeldlosen Geldverkehr für den Verkauf von Zugtickets o.ä. aufweist und in einen Slot eines Computers eingesteckt werden kann (siehe auch Präumbel des Anspruchs 1).

Lesegeräte für elektronische Datenträger finden aber auch Verwendung in sicherheitsrelevanten Bereichen, wie z.B. in Forschungszentren, Ministerien oder militärischen Anlagen. Dazu werden die Lesegeräte zur Identifizierung und zur Autorisierung von den dort tätigen Personen eingesetzt, um dann z.B. das Aufspielen von "elektronischen Schlüsseln" aus einem elektronischen Datenträger auf einen dafür ausgebildeten Netzzugangsrechner bzw. auf ein sog. Gateway zu ermöglichen. Durch die Verwendung elektronischer Schlüssel ist es dabei möglich, den elektronischen Datenverkehr durch Verschlüsselung sowohl in dem eigenen Datennetz, wie z.B. dem Intranet, als auch in ein externes Datennetz, wie z.B. dem Internet, zu schützen. Der elektronische Datenträger, wie z.B. ein SIM-Modul, mit den elektronisch gespeicherten Schlüsseln kann dabei z.B. durch ein geeignetes Lesegerät im beispielhaften Netzzugangsrechner ausgelesen werden. Dazu wird der Datenträger einfach in einen dafür vorgesehenen Aufnahmeschlitz eingeführt. Das Auslesen erfolgt dann z.B. nach Abschluss der Identifizierung durch Einführen einer Chipkarte in das eingangs beschriebene Lesegerät und nach Autorisierung durch Eingabe einer gültigen PIN mittels der dafür vorgesehenen Eingabetastatur. Der Zugang zum Aufspielen der Daten aus dem elektronischen Datenträger kann z.B. auch nur durch Eingabe einer PIN-Nummer erfolgen.

Dabei tritt bei den eingangs beschriebenen Lesegeräten das Problem auf, dass diese durch ihren einfachen mechanischen Aufbau geöffnet und manipuliert werden können, um sich z.B. unbefugt Zugang zu den Daten im Netzzugangsrechner zu verschaffen.

Ein weiteres Problem ist es, dass die für die PIN-Eingabe vorgesehene Eingabetastatur des eingangs beschriebenen Lesegeräts eine besondere Aufmerksamkeit erweckt, das Lesegerät näher zu betrachten und sich ggf. durch zufällige Eingaben von PIN-Nummern Zugang zum Netzzugangsrechner oder zu einem daran angeschlossenen Rechner zu verschaffen.

Dabei tritt das weitere Problem auf, dass es durch Scannen des Datenverkehrs an der Schnittstelle oder an dem Datenkabel des Lesegeräts möglich ist, die übertragenen Daten zu analysieren und sich dadurch unbefugt Zugang zum beispielhaften Netzzugangsrechner zu verschaffen.

Der Erfindung liegt somit die Aufgabe zugrunde, ein Lesegerät für elektronische Datenträger anzugeben, welches einen erhöhten Schutz vor Manipulationen am Lesegerät und vor Umwelteinflüssen aufweist. Der Erfindung liegt die weitere Aufgabe zugrunde, einen Desktop-Rechner sowie einen Netzzugangsrechner anzugeben, in welche auf einfache Weise ein derartiges Lesegerät integriert werden kann.

Die Aufgabe wird gelöst mit einem Lesegerät für elektronische Datenträger gemäß den Merkmalen des Patentanspruchs 1.

Das Lesegerät enthält ein Chassis und eine elektronische Datenverarbeitungseinheit, welche als ausfahrbare Lade im Chassis gelagert ist, eine Leseeinrichtung für die elektronischen Datenträger, eine erste Identifizierungseinrichtung, welche so auf der Datenverarbeitungseinheit angeordnet ist, dass diese im ausgefahrenen Zustand zugänglich ist, und eine Datenschnittstelle zur Weiterleitung der von der Leseeinheit erfassten Daten der elektronischen Datenträger auf. Zusätzlich weist die elektronische Datenverarbeitungseinheit erste Mittel zur Verriegelung der Lade im Chassis im eingefahrenen Zustand, und zweite Mittel zur Freigabe der ersten Mittel auf, wenn zumindest eine zweite Identifizierungseinrichtung an der Front seite ausfahrbaren Lade ein Freigabesignal erzeugt.

Die Leseeinrichtung kann zudem an einer Frontseite der ausfahrbaren Lade der elektronischen Datenverarbeitungseinheit angeordnet sein. Die erste Identifizierungseinrichtung kann z.B. ein Tastatureingabefeld oder ein Fingerprintsensor sein. Weiterhin weist die elektronische Datenverarbeitungseinheit des Lesegeräts die weite Identifizierungseinrichtung, wie z.B. einen Chipkartenleser für Chipkarten, an der Frontseite der ausfahrbaren Lade auf. Die Datenverarbeitungseinheit kann die von der Leseeinheit erfassten Daten der elektronischen Datenträger nach Autorisierung durch eine der Identifizierungseinrichtungen zulassen. Weiterhin kann ein Desktop-Rechner einen Einschubschacht für das oben beschriebene Lesegerät für elektronische Datenträger aufweisen, in welchem das Lesegerät für elektronische Datenträger angeschlossen ist. Schließlich kann ein Netzzugangsrechner zur datentechnischen Anbindung eines internen Kommunikationsnetzes an ein externes Kommunikationsnetz einen Einschubschacht aufweisen, in welchem das Lesegerät für elektronische Datenträger angeschlossen ist.

Der Vorteil des erfindungsgemäßen Lesegeräts liegt darin begründet, dass die erste Identifizierungseinrichtung vor Umwelteinflüssen, wie z.B. vor Staub, geschützt ist. Ein Ausfahren der Lade mit der ersten Identifizierungseinrichtung ist somit nur für die Dauer einer Identifizierung durch eine Person notwendig. Darüber hinaus ist vorteilhaft die erste Identifizierungseinrichtung im eingefahrenen Zustand nicht sichtbar, so dass eine nichtbefugte Person auch nicht durch das bloße Vorhandensein einer Identifizierungseinrichtung "eingeladen" wird, diese zu benutzen.

Ein weiterer Vorteil gemäß der Erfindung ist es, dass ein Ausfahren der Lade mit einschließlich der ersten Identifizierungseinrichtung erst dann von der Datenverarbeitungseinheit ermöglicht wird, wenn sich eine Person an der zweiten Identifizierungseinrichtung an der Frontseite der Lade, z.B. mit einer Chipkarte, autorisiert hat. Dadurch ist die erste Identifizierungseinrichtung, wie z.B. ein Tastaturfeld für die PIN-Eingabe, vor Eingabeversuchen sowie für technische Manipulationen im Inneren des Lesegeräts geschützt.

Weiterhin ist es vorteilhaft, das Lesegerät gemäß einer weiteren Ausführung als Einschubmodul auszubilden, welches in einen Einschubschacht eines Rechners, vorzugsweise in einem 3,5"-Standard-Einschubschacht, angeschlossen werden kann. Dadurch ist auf einfache Weise eine mechanische und elektrische Integration in einen Rechner bzw. in einem Netzzugangsrechner möglich. Darüber hinaus ist das Lesegerät im eingebauten Zustand gegen Manipulationen an der Datenschnittstelle, wie z.B. durch Scannen des Datenverkehrs, im Vergleich zur externen anschließbaren Ausführungsform, geschützt.

Im folgenden wird eine bevorzugte Ausführungsform des erfindungsgemäßen Lesegeräts für elektronische Datenträger an einer beispielhaften Figur erläutert.

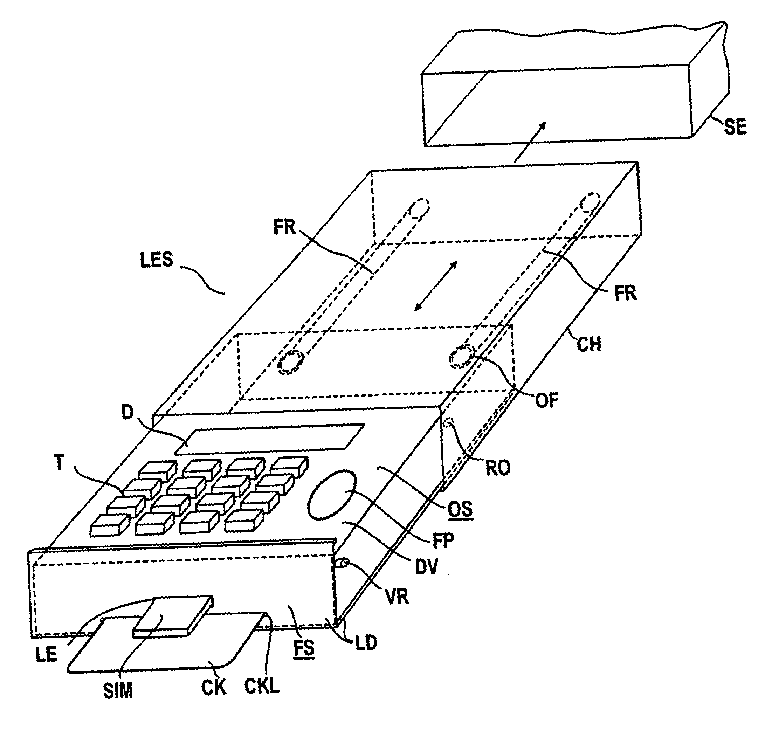

Dabei zeigt die Figur das erfindungsgemäße Lesegerät LES, welches ein Chassis CH und eine im Chassis CH gelagerte ausfahrbare Lade LD mit einer elektronischen Datenverarbeitungseinheit DV aufweist. Die Datenverarbeitungseinheit DV weist dabei auf ihrer Oberseite OS, d.h. auf ihrer oberen Mantelfläche zwei erste Identifizierungseinrichtungen T,FP in einer gemeinsamen Darstellung auf. Die erste beispielhafte Ausführungsvariante der ersten Identifizierungseinrichtung T ist ein Tastatureingabefeld T, mittels welcher eine PIN-Nummer, d.h. eine persönliche Zugangsnummer zur Autorisierung eingegeben werden kann. Alternativ ist als weitere Ausführungsvariante der ersten Identifizierungseinrichtung FP ein Fingerprintsensor FP dargestellt. Durch Auflegen eines Fingers auf diesen Sensor FP ist es einer Person möglich, sich durch die biometrische Einmaligkeit des Fingerabdrucks zu autorisieren.

Auf der Frontseite FS der Lade LD ist ferner gemäß der Erfindung eine zweite Identifizierungseinrichtung CKL, insbesondere ein Chipkartenleser CKL ersichtlich. Durch Einführen einer Chipkarte CK ist es einer Person möglich, sich durch diese zu identifizieren. Desweiteren ist gemäß der Erfindung auf der Frontseite FS eine Leseeinrichtung LE für die elektronischen Datenträger SIM gemäß der Erfindung zu sehen. Der Datenträger kann dabei z.B. ein SIM-Modul oder eine Multimediakarte sein. Datenträger SIM dieser Art können dabei mehrere Megabyte an Dateninformation z.B. mittels eines internen EEPROM-Speichers oder eines FRAM-Speichers speichern. Beim Einstecken des elektronischen Datenträgers SIM wird eine elektrische Verbindung mittels mehrerer elektrischer Kontakte hergestellt, durch welche die Daten, wie z.B. die elektronischen Schlüssel, mittels des Lesegeräts LE sehr schnell beschrieben und ausgelesen werden können.

Der Vorteil des erfindungsgemäßen Lesegeräts LES für elektronische Datenträger SIM liegt darin begründet, dass die erste Identifizierungseinrichtung T,FP vor Umwelteinflüssen, wie z.B. vor Staub, geschützt ist. Ein Ausfahren der Lade LD mit der ersten Identifizierungseinrichtung T,FP ist somit nur für die Dauer einer Identifizierung durch eine Person notwendig.

Ein weiterer Vorteil ist es, dass die erste Identifizierungseinrichtung T,FP im eingefahrenen Zustand nicht sichtbar ist. Dadurch kann eine nichtbefugte Person durch das bloße Vorhandensein einer Identifizierungseinrichtung T,FP allein nicht aufmerksam gemacht werden, diese genauer zu begutachten und diese zu benutzen.

Weiterhin sind im Beispiel der Figur Verriegelungsmittels VR, wie z.B. ein Verriegelungsbolzen erkennbar, der im eingeschobenen Zustand der Lade LD diese durch Einfahren in eine entsprechende Rastöffnung RO im Chassis CH verriegelt. Desweiteren sind im Beispiel der Figur Führungsstäbe FR erkennbar, durch welche die Lade LD im Chassis CH gelagert ist. Mittels nicht weiter dargestellter Federn ist es auch möglich, dass durch manuelles Lösen der Lade LD, wie z.B. durch Haltelaschen, diese durch die Vorspannung der Federn ausgefahren wird. Beim Einfahren der Lade LD werden die Federn im Inneren der Lade LD, d.h. im Beispiel der Figur im Inneren der Datenverarbeitungseinheit DV, wieder gespannt. Die Führungsstäbe FR fahren beim Einschieben der Lade LD durch entsprechend vorgesehene Öffnungen OF ein.

Ein weiterer Vorteil gemäß der Erfindung ist es, dass ein Ausfahren der Lade LD mit einschließlich der ersten Identifizierungseinrichtung T,FP erst dann von der Datenverarbeitungseinheit DV, z.B. durch Einfahren des Verriegelungsbolzen mittels eines Elektromagneten, ermöglicht wird, wenn sich eine Person an der zweiten Identifizierungseinrichtung CKL an der Frontseite FS der Lade LD, z.B. mit einer Chipkarte CK, autorisiert hat. Dadurch ist die erste Identifizierungseinrichtung T,FP, wie z.B. ein Tastaturfeld T für die PIN-Eingabe, vor Eingabeversuchen sowie für technische Manipulationen im Inneren des Lesegeräts LES geschützt.

Weiterhin ist im Beispiel der Figur ein Einschubschacht ES zu sehen, in welchem das Lesegerät LES als Modul eingeschoben werden kann. Einschubschächte werden bei Rechnern, Gateways etc. standardmäßig verwendet, um zusätzliche Komponenten für eine Erweiterung auf einfache Weise aufzunehmen. Bekannte Einschubschächte sind z.B. der 3,5"- oder der 5,25"-Einschub.

Es ist somit eine mechanische und elektrische Integration in einen Rechner bzw. in einem Netzzugangsrechner möglich. Darüber hinaus ist das Lesegerät LES vorteilhaft im eingebauten Zustand gegen Manipulationen an der Datenschnittstelle, wie z.B. durch Scannen des Datenverkehrs, i.Vgl. zur externen anschließbaren Ausführungsform, geschützt.

## Patentansprüche

1. Lesegerät (LES) für elektronische Datenträger (SIM), mit einem Chassis (CH) und einer elektronischen Datenverarbeitungseinheit (DV), welche als ausfahrbare Lade (LD) im Chassis (CH) gelagert ist, welche zusätzlich aufweist,
a) zumindest eine Leseeinrichtung (LE) für die elektronischen Datenträger (SIM),
b) zumindest eine erste Identifizierungseinrichtung (T, FP), welche so auf der Datenverarbeitungseinheit (DV) angeordnet ist, dass diese im ausgefahrenen Zustand zugänglich ist,
c) eine Datenschnittstelle zur Weiterleitung der von der Leseeinheit (LE) erfassten Daten der elektronischen Datenträger (SIM), **gekennzeichnet durch**
d) eine zweite Identifizierungseinrichtung (CKL) an der Frontseite (FS) der ausfahrbaren Lade (LD),
e) erste Mittel (VR,RO) zur Verriegelung der Lade (LD) im Chassis (CH) im eingefahrenen Zustand, und
f) zweite Mittel zur Freigabe der ersten Mittel (VR,RO), wenn zumindest die zweite Identifizierungseinrichtung (CKL) ein Freigabesignal erzeugt.

2. Lesegerät (LES) nach Anspruch 1, wobei die zumindest eine Leseeinrichtung (LE) an einer Frontseite (FS) der ausfahrbaren Lade (LD) der elektronischen Datenverarbeitungseinheit (DV) angeordnet ist.

3. Lesegerät (LES) nach Anspruch 1 oder 2, wobei die zumindest eine erste Identifizierungseinrichtung (T,FP) ein Tastatureingabefeld (T) ist.

4. Lesegerät (LES) nach Anspruch 1 oder 2, wobei die zumindest eine erste Identifizierungseinrichtung (T,FP) ein Fingerprintsensor (FP) ist.

5. Lesegerät (LES) nach Anspruch 1, wobei die zweite Identifizierungseinrichtung (CKL) ein Chipkartenleser (CKL) für Chipkarten (CK) ist.

6. Lesegerät (LES) nach einem der vorangegangenen Ansprüche, wobei die elektronische Datenverarbeitungseinheit (DV) eine Weiterleitung der von der Leseeinheit (LE) erfassten Daten der elektronischen Datenträger (SIM) nach Autorisierung durch zumindest eine der Identifizierungseinrichtungen (T,FP,CKL) zulässt.

7. Desktop-Rechner mit zumindest einem Einschubschacht (ES), in welchem ein Lesegerät (LES) für elektronische Datenträger (SIM) nach einem der vorangegangenen Ansprüche angeschlossen ist.

8. Netzzugangsrechner zur datentechnischen Anbindung eines internen Kommunikationsnetzes an ein externes Kommunikationsnetz mit zumindest einem Einschubschacht (ES), in welchem ein Lesegerät (LES) für elektronische Datenträger (SIM) nach einem der vorangegangenen Ansprüche 1 bis 6 angeschlossen ist.

## Claims

1. Reader (LES) for electronic data carriers (SIM) with a chassis (CH) and an electronic data processing unit (DV), which is mounted in the chassis as a slide-out drawer (LD), having in addition
a) at least one read device (LE) for the electronic data carrier (SIM)
b) at least one first identification device (T, FP) which is disposed on the data processing unit (DV) such that it can be accessed when the latter is extended,
c) a data interface for forwarding the data from the electronic data carriers (SIM) that has been captured by the read unit (LE),
**characterised by**
d) a second identification device (CKL) on the front surface (FS) of the slide-out drawer (LD)
e) a first means (VR, RO) for locking the drawer (LD) in the chassis (CH) when retracted, and
f) a second means for releasing the first means (VR, RO), if at least the second identification device (CKL) generates a release signal.

2. Reader (LES) according to Claim 1, in which at least one read device (LE) is disposed on the front surface (FS) of the slide-out drawer (LE) of the electronic data processing unit (DV).

3. Reader (LES) according to Claim 1 or 2, in which at least a first identification device (T, FP) is a keyboard input panel (T).

4. Reader (LES) according to Claim 1 or 2, in which at least a first identification device (T, FP) is a fingerprint sensor (FP).

5. Reader (LES) according to Claim 1, in which the second identification device (CKL) is a chip card reader (CKL) for chip cards (CK).

6. Reader (LES) according to one of the preceding claims, in which the electronic data processing unit (DV) permits the forwarding of the data from the electronic data carriers (SIM) that has been captured by the read unit (LE) following authorisation by at least one of the identification devices (T, FP, CKL).

7. Desktop computer with at least one slide-in bay (ES), in which a reader (LES) for electronic data carriers (SIM) is connected according to one of the preceding claims.

8. Network access computer for the data connection of an internal communication network to an external communication network with at least one slide-in bay (ES, in which a reader (LES) for electronic data carriers (SIM) is connected according to one of the preceding Claims 1 to 6.

## Revendications

1. Lecteur (LES) pour des supports électroniques de données (SIM), comportant un châssis (CH) et une unité électronique de traitement de données (DV) qui est montée sous forme de compartiment (LD) extractible dans le châssis (CH) et qui présente en outre
a) au moins une installation de lecture (LE) pour les supports électroniques de données (SIM),
b) au moins une première unité d'identification (T, FP) qui est disposée sur l'unité de traitement des données (DV) de telle sorte qu'elle soit accessible à l'état extrait,
c) une interface de données destinée à retransmettre les données - saisies par l'installation de lecture (LE) - des supports électroniques de données (SIM),
**caractérisé par**
d) une deuxième unité d'identification (CKL) située sur la face avant (FS) du compartiment (LD) extractible,
e) de premiers moyens (VR, RO) destinés à verrouiller le compartiment (LD) dans le châssis (CH) à l'état inséré, et
f) de deuxièmes moyens destinés à libérer les premiers moyens (VR, RO) lorsqu'au moins la deuxième unité d'identification (CKL) produit un signal de libération.

2. Lecteur (LES) selon la revendication 1, pour lequel ladite au moins une installation de lecture (LE) est disposée sur une face avant (FS) du compartiment (LD) extractible de l'unité électronique de traitement de données (DV).

3. Lecteur (LES) selon la revendication 1 ou 2, pour lequel ladite au moins une première unité d'identification (T, FP) au moins au nombre d'une est une zone de saisie au clavier (T).

4. Lecteur (LES) selon la revendication 1 ou 2, pour lequel ladite au moins une première unité d'identification (T, FP) est un capteur d'empreintes digitales (FP).

5. Lecteur (LES) selon la revendication 1, pour lequel la deuxième unité d'identification (CKL) est un lecteur de carte à puce (CKL) pour des cartes à puce (CK).

6. Lecteur (LES) selon l'une des revendications précédentes, pour lequel l'unité électronique de traitement des données (DV) permet de retransmettre les données du support électronique de données (SIM) qui sont saisies par l'unité de lecture (LE) après autorisation par au moins une des installations d'identification (T, FP, CKL).

7. Ordinateur de bureau comportant au moins un tiroir enfichable (ES) dans lequel est raccordé un lecteur (LES) pour des supports électroniques de données (SIM) selon l'une des revendications précédentes.

8. Ordinateur d'accès au réseau destiné à la liaison informatique d'un réseau de communication interne à un réseau de communication externe comportant au moins un tiroir enfichable (ES) dans lequel est raccordé un lecteur (LES) pour des supports électroniques de données (SIM) selon l'une des revendications 1 à 6.
